# EUROPÄISCHE PATENTSCHRIFT

(11) **EP 0 890 382 B1**
(45) Veröffentlichungstag und Bekanntmachung des Hinweises auf die Patenterteilung: **23.03.2005**
(21) Anmeldenummer: 98112559.4
(22) Anmeldetag: 07.07.1998
(51) Int. Cl.: B01D 21/24, C02F 1/00, B01D 17/025, B01D 17/032

(54) **Vorrichtung zur Beschickung von Rundbecken mit zu klärendem Abwasser**
Device to feed waste water to be purified into circular tanks
Dispositif d'alimentation de bassins circulaires en eau usée à épurer

(30) Priorität: 10.07.1997 DE 19729890
(43) Veröffentlichungstag der Anmeldung: 13.01.1999
(73) Patentinhaber: Freimann, Robert, Dipl.-Ing., 84453 Mühldorf am Inn (DE)
(72) Erfinder: Freimann, Robert, Dipl.-Ing., 84453 Mühldorf am Inn (DE)
(74) Vertreter: Rehberg Hüppe + Partner

(56) Entgegenhaltungen:
- WO-A-93/21111
- GB-A- 867 948
- JP-A- 62 269 719
- US-A- 1 908 102
- US-A- 2 185 785
- US-A- 2 479 126
- US-A- 2 733 986
- US-A- 3 534 861
- US-A- 4 263 137
- US-A- 5 458 777
- US-A- 5 599 450

## Beschreibung

Die Erfindung betrifft eine Vorrichtung zur Beschickung von Rundbecken mit zu klärendem Abwasser.

Solche Rundbecken haben im allgemeinen ein zentrisches Mittelbauwerk und ziehen aus dem Becken das geklärte Abwasser über eine gezackte Überlauf schwelle in eine Rinne, oder über sternförmig angeordnete, gesteckte Tauchrohre in eine Rinne oder über eine getauchte Ringleitung ab. Außerdem gibt es dort immer einen zentrischen Schlammabzug.

Bekannt sind aber auch eine bodennahe in gegeneinander gestellten Strahlen erfolgende Einleitung samt Abzug oben konzentrisch über Wehre bei mittigem Schlammabzug (Firma Lakeside; vgl. US-A-2,959,290 und US-A-3,327,867).

Bei zentrischen Bauwerken als Einlaufvorrichtung von Klärbecken strömt durch punkt- oder linienförmige Einlauföffnungen oder mittels um den gesamten Umfang des Mittelbauwerks reichende Einlaufflächen das zu reinigende Abwasser in die Rundbecken. Das kreisrunde Klärbecken funktioniert nur dann optimal, wenn die Quellströmung aus dem Mittelbauwerk in alle Richtungen gleichmäßig verteilt und mit möglichst geringen Strömungsgeschwindigkeiten abfließen kann.

Dieser zentrische Einlauf wird ungünstig durch ungleichförmige Anströmung des Mittelbauwerks zum Beispiel mittels Krümmer und das Fortschreiten dieser Ungleichförmigkeit in das Becken beeinflusst. Andererseits finden bei einer Quellströmung selbst bei völliger Gleichförmigkeit der Zuströmung physikalische Vorgänge statt, die zu Bewegungsschwankungen führen. Im ungünstigsten Fall liegen damit die maximalen Strömungsgeschwindigkeiten um ein Vielfaches über den mittleren Geschwindigkeiten. Dies erklärt Fälle, bei denen trotz guter Schlammeigenschaften und sehr geringen mittleren Strömungsgeschwindigkeiten nur dürftige Reinigungsleistungen erreicht werden. Schlamm wird durch die Geschwindigkeitsspitzen verstärkt mitgerissen oder seine Sedimentation wird verhindert. Er gelangt in den Auslauf, der Betreiber wird mit höheren Abgaben belastet.

Weitere Schwierigkeiten sind darin zu sehen, dass bei zentrischer Beckenbeschickung und gleichzeitigem zentrischen Schlammabzug sich Bereiche entgegengesetzter Bewegungsrichtung und daraus resultierende erhöhte Schubspannungen ergeben und dadurch der Eindickungsgrad des abgesetzten Schlammes wieder verringert wird. Damit wird der Wassergehalt wieder erhöht, der Aufwand der Schlammbehandlung steigt, zudem sind bei Belebungsanlagen große Beckenvolumina von Belebungsbecken und Nachklärbecken notwendig.

Die Kosten eines zentrisch beschickten Rundbeckens sind vor allem wegen der erforderlichen Dükerleitung für den Beckenzulauf zum Mittelbauwerk sehr hoch. Auch die erforderlichen großen Beckenvolumina führen zu hohen Bau- und Unterhaltskosten. Zusätzlich zu den teilweise nicht zufriedenstellenden Reinigungsergebnissen sind somit auch die Kosten ein Nachteil zentrisch beschickter Rundbecken.

Die US-A-2,185,785 zeigt eine Vorrichtung zur Beschickung eines Rundbeckens mit zu klärendem Abwasser. Die Vorrichtung weist eine Zutrittsleitung für das Abwasser in das Becken auf, die die Wandung des Beckens durchsetzt und sich in eine Mehrzahl ringförmiger Verteilerleitungen im Becken verzweigt. Die Verteilerleitungen weisen auf ihrer Unterseite Öffnungen zum Austritt des Abwassers in das Becken auf. Die Verteilerleitungen sind in beachtlichem Abstand zur Beckensohle, etwa auf halber Höhe zum Freispiegel, angeordnet. Den Öffnungen zum Austritt des Abwassers sind Prallplatten zu- und vorgeordnet, um eine möglichst schnelle Energiedissipation der ausströmenden Strahlen zu erreichen.

Die WO-A-93/21111 zeigt eine Vorrichtung zur Entnahme von geklärtem Abwasser aus Rundbecken.

Die US-A-5,599,450 zeigt in den Fig. 1 und 3 eine Vorrichtung zur Beschickung eines Beckens runder Form mit zu klärendem Abwasser. Auch hier sind eine Mehrzahl von ringförmigen Verteilerleitungen über die (horizontale) Fläche des Beckens verteilt angeordnet, die über eine gemeinsame Zutrittsleitung beschickt werden. Die Vorrichtung zur Beschickung weist auch eine ringförmige Verteilerleitung im Becken auf, die nahe der Beckensohle unterhalb des Freispiegels angeordnet ist. Diese ringförmige Verteilerleitung weist auf ihrer Oberseite Öffnungen zum Austritt des Abwassers in das Becken auf.

Die JP-A-62.269.719 zeigt ein Becken, dessen Wandung im unteren Teil trichterförmig und im oberen Teil zylindrisch ausgebildet ist. Etwa an der Übergangsstelle zwischen diesen beiden Wandabschnitten ist eine Verteilerleitung vorgesehen, die zentrisch über mehrere Zutrittsteitungen beschickt wird. Die Verteilerleitung besitzt hierzu mehrere sich in Umfangsrichtung erstreckende einzelne Abschnitte. In den einzelnen Abschnitten sind Öffnungen zum Austritt des Abwassers vorgesehen, die nach unten gerichtet angeordnet sind. Damit sollen sich die festen Bestandteile an der Trichterwand ablagern, während die Flüssigkeit in entgegengesetzter Richtung nach oben strömen soll.

Die US-A-1,908,102 zeigt eine Vorrichtung zur Beschickung eines trichterförmigen Beckens mit zu klärendem Abwasser. Das Becken besitzt keine Beckensohle, sondern nur einen Auslass. Die Verteilerleitung ist in beachtlichem Abstand zum Auslass angeordnet. Die Verteilerleitung weist auf ihrer Innenseite Öffnungen zum Austritt des Abwassers in das Becken auf. Das Becken ist vertikal durchströmt.

Durch die US-A-4,263,137 ist eine Verteilerleitung mit einer Vielzahl von hintereinander liegenden Öffnungen, ausgerüstet mit Diffuseren, bekannt. Im Gegensatz zur vorliegenden Erfindung jedoch ist die Verteilerleitung dort entweder außerhalb des Rundbeckens angeordnet, und die Diffusoren münden durch die Beckenwandung in das Beckeninnere, oder die Verteilerleitung im Inneren des Beckens ist als Gerinne ausgeführt, durch dessen Sohle die Beschickung der Diffusoren erfolgt. Der Vorteil der vorliegenden Erfindung liegt demgegenüber aber gerade in einer relativ einfach zu installierenden Druckrohrleitung im Inneren des Beckens, wobei durch eine entsprechend geeignete Ausbildung der Öffnungen im Verhältnis zum Durchmesser der Verteilerleitung eine optimale Rundbeckenbeschickung erfolgt.

Umfangswandnahe Einleitungen sind zudem durch die US-A-3,534,861 sowie die US-A-4,038,185 sowie US-A-4,555,340 bekannt. Die Einleitung erfolgt dabei allerdings nicht über ein vollgefülltes ringförmiges Verteilerrohr.

Demgegenüber liegt der Erfindung die Aufgabe zugrunde, die Geschwindigkeitsspitzen im Rundbecken deutlich zu vermindern oder gar auszuschließen, dadurch die Ablaufqualität zu steigern, die zum Erreichen eines Reinigungszieles erforderlichen Beckenvolumina zu verringern und vor allen Dingen Strahleinmischungen zu minimieren. Hierdurch soll Schlamm nicht gegen den Zulaufstrahl geleitet werden. Vielmehr soll dieser sich schnell mittig absetzen.

Gelöst wird diese Aufgabe durch eine Vorrichtung mit den Merkmalen des Patentanspruchs 1. Dadurch erreicht man eine unterhalb der Oberfläche des geklärten Abwassers und nahe der Bodensohle voll beaufschlagte das Rundbecken mit zu klärendem Abwasser gleichmäßig und vom Beckenrand zum Zentrum beschickende Verteilung.

Die das Rundbecken mit zu klärendem Abwasser gleichmäßig und vom Beckenrand zum Zentrum beschickende Ringleitung kann mit Durchbrechungen gleichen Abstands vorgesehen sein.

Nach noch einer weiteren Variante kann die voll beaufschlagte, das Rundbecken mit zu klärendem Abwasser gleichmäßig und vom Beckenrand zum Zentrum beschickende Ringleitung mit Durchbrechungen unterschiedlichen Abstandes versehen sein.

Das Becken wird also von außen in Richtung Zentrum des Beckens durch ein unterhalb der Oberfläche befindliches, voll gefülltes Verteilerrohr mit einer gleichmäßig über den Umfang verteilten Menge beschickt. Im Gegensatz zur Quellströmung bei zentrischer Beschickung stellt sich dadurch eine stabile, gegenüber räumlichen und zeitlichen Ungleichförmigkeiten sehr unempfindliche Senkenströmung ein. Die Ringleitung kann äquidistant zum Zentrum des Beckens angeordnet werden. Bei richtiger, aufeinander abgestimmter Dimensionierung der Rohröffnungen und Rohrdurchmesser genügt ggf. eine einzige Zulaufleitung durch die Beckenwand.

Durch die Maßnahme nach der Erfindung wird bei gleichzeitig geringeren Baukosten die Feststoffabscheidung verbessert, genauso wie der Reinigungsgrad. Die Abwasserabgaben werden gesenkt. Die bisher in Kauf zu nehmende bodennahe Strahleinmischung wird vermindert. Schlamm wird nicht mehr gegen den Zulaufstrahl geleitet.

Günstig ist es, wenn die Verteilung, insbesondere die Ringleitung im Abstand von 20 - 40 cm von der Sohle innerhalb des Beckens angeordnet ist. Die Zulauföffnungen sind in Richtung Beckenzentrum und unter ca. 45° Neigung gegen die Sohle gerichtet.

Die Zulauföffnungen bzw. Durchbrechungen zum Rundbecken können nach einer wahlweisen Ausführungsform als Schlitze von mindestens 5 cm Breite derart ausgebildet sein, dass durch Veränderungen der Schlitzlänge (bei der Auslegung) eine genaue Anpassung an die hydraulischen Randbedingungen, d.h. insbesondere die Druckhöhe sowie die Rohrreibung und die örtlichen Verluste herbeiführbar ist.

Nach einer besonders günstigen Ausführungsform wird dem konzentrischen äußeren Zulauftauchrohr mittig ein sternförmiges Ablaufrohr, das ebenfalls getaucht ist und etwa 30 cm unterhalb der verstellbaren Ablaufkante aus dem Becken angeordnet ist, zugeordnet sein.

Angewendet werden kann die Maßnahme auch auf die Beschickung von Rechteckbecken, wobei die Ringleitung den vier Beckenwandungen folgt, d. h. parallel zu diesen verläuft.

Statisch erfolgt die Abstützung auf Konsolen.

Die als Sammelleitung ausgebildete Rohrleitung wird diskontinuierlich beaufschlagt. Durch ein geeignetes Verhältnis von Öffnungsfläche zu Rohrdurchmesser wird die notwendige Ungleichförmigkeit des Abflusses längs des Rohres bei gleichem Rohrdurchmesser äußerst gering.

Für große Zuflussmengen ist es denkbar, den Rohrdurchmesser stufenweise dem zugehörigen Durchfluss anzupassen.

Bei der Berechnung der Anlage sind Verluste wie Rohrreibung, gegebenenfalls Stoßverluste, sowie Druckhöhenrückgewinn infolge der Abströmung senkrecht zur Fließrichtung im Rohr zu berücksichtigen.

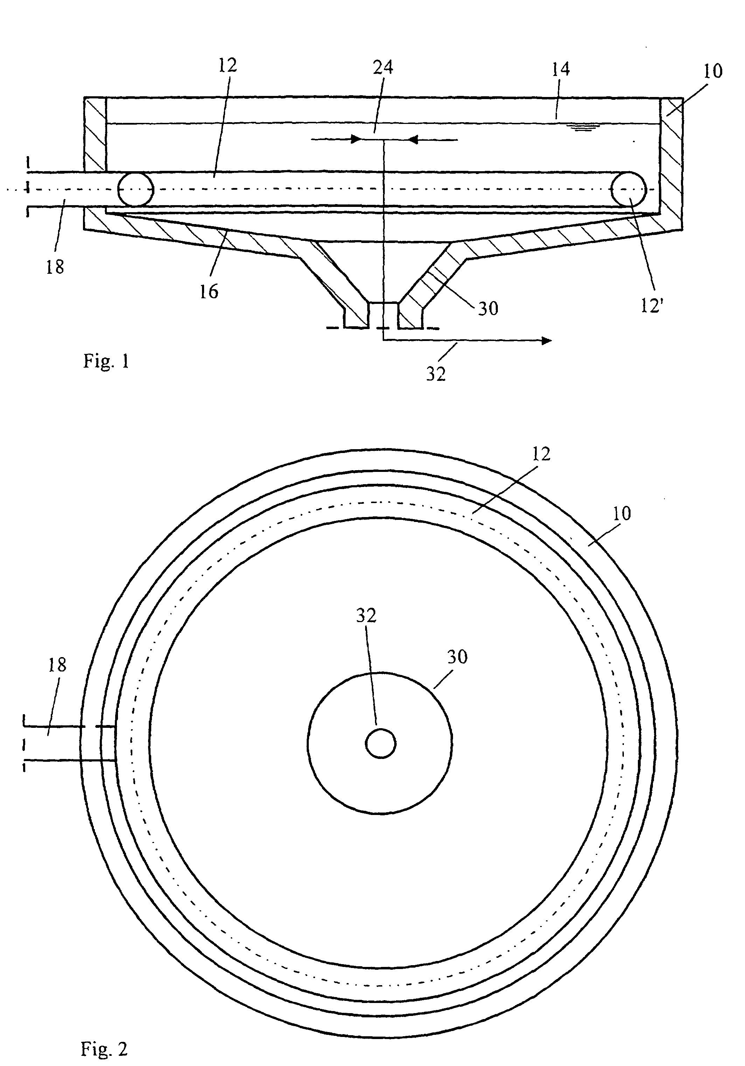

Beispielsweise Ausführungsformen der Erfindung sollen nun anhand der beiliegenden Zeichnungen näher erläutert werden diese zeigen in
- **Fig. 1**: eine schematische Ansicht einer ersten Ausführungsform, wobei ein Verteilerrohr innerhalb eines Rundbeckens gezeigt ist;
- **Fig. 2**: ist eine Draufsicht zu Fig. 1;
- **Fig. 3**: zeigt eine Einzelheit des Zulaufs;
- **Fig. 4**: zeigt den Strömungsverlauf im Verteilerrohr.

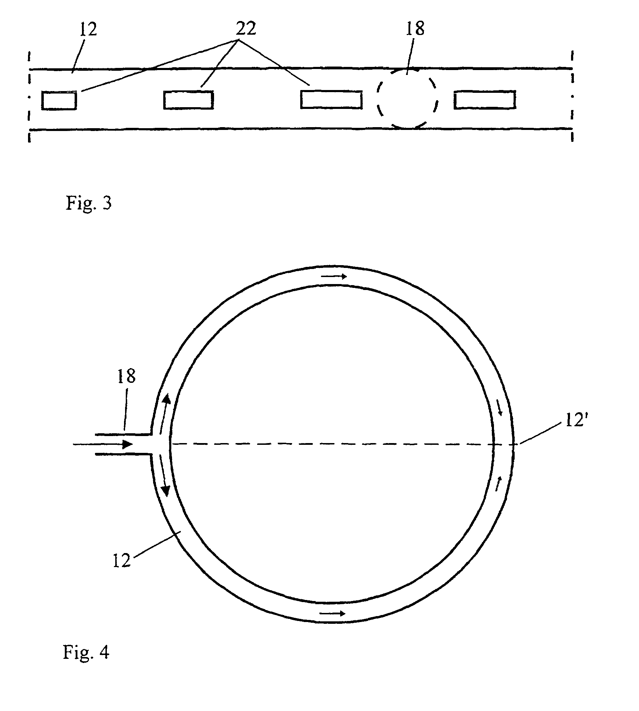

In einem Rundbecken 10, im allgemeinen aus Beton, ist äquidistant vom Beckenrand eine Verteilerleitung 12 angeordnet, und zwar im getauchten Zustand im Abstand unterhalb des Freispiegels 14 nahe der Beckensohle 16. Als beispielsweiser Abstand können 20 - 40 cm parallel von der Beckensohle genannt werden. Bei 24 befindet sich ein definierter Auslauf. An dieser Stelle kann vorzugsweise ein Tauchrohr sitzen. Das Wasser strömt also über den Auslauf 24 aus dem Becken aus. Über eine Zutrittsleitung 18 tritt das Abwasser durch die Beckenwand in die Verteilerleitung 12 ein. Das zu klärende Abwasser wird dann definiert über die Ringleitung 12 dem Becken zugeführt, die, wie Fig. 3 zeigt, unter gleichem Abstand schlitzförmige Öffnungen 22 auf weist. Diese Öffnungen können Mindestbreiten von 5 cm haben. Von der Verteilerleitung strömt das zu klärende Abwasser sohlennah in das Rundbecken 10 ein. Dabei wird im Bereich des Übergangs von der Zuleitung 18 zur Verteilerleitung 12 das Abwasser die maximale Strömungsgeschwindigkeit, am gegenüberliegenden Ende 12' eine Geschwindigkeit von praktisch Null, haben. Verteilerleitung 12 und Zutrittsleitung 18 sind immer voll gefüllt.

Es wird immer ein volles Rohr betrieben. Die gegebenenfalls schlitzförmigen Zuflussöffnungen 22 der Verteilerleitung 12 sollten das zu klärende Abwasser vorzugsweise unter 45° Neigung in Richtung Beckensohle dem Becken zuführen. Durch die oben erwähnte Ausbildung der Zuflussöffnungen am Verteilerrohr als Schlitze von mindestens 5 cm Breite ist es durch Veränderungen der Schlitzlänge möglich, eine Anpassung an die hydraulischen Randbedingungen wie Druckhöhe, Rohrreibung etc. herbeizuführen. Nach Obigem wird das Verteilerrohr selbst über die Ablaufleitung 24 mit dem Ablauf Schacht verbunden. Die Maßnahmen nach der Erfindung können auch auf Rechteckbecken angewendet werden. Hierbei ist die Ringleitung äquidistant den Beckenwandungen folgend wandnah angeordnet und verläuft parallel zu den Beckenwandungen. Der Schlammtrichter ist mit 30, der Schlammabzug mit 32 bezeichnet.

In Fig. 4 ist der Strömungsverlauf im Verteilerrohr nochmals schematisch dargestellt. Nach der Aufteilung im Anschluss an die Zuleitung 18 liegen in den beiden Rohrhälften zunächst hohe, im weiteren Verlauf bis zum Staupunkt 12' abnehmende Geschwindigkeiten vor. In Punkt 12' ist die Geschwindigkeit gleich Null. Die Pfeilgrößen in Fig. 4 deuten die Geschwindigkeitsabnahme vom Beginn der Verteilerleitung 12 zum gegenüberliegenden Punkt 12' an.

Dieser Strömungsverlauf kann genauso durch zwei getrennte Zuleitungen auf die beiden Rohrleitungshälften, ebenso im Punkt 12' zusätzlich bei getrennter Rohrleitung erhalten werden.

Weitere Ausführungsformen sind denkbar: es kann dem konzentrischen äußeren Zulauftauchrohr ein ebenfalls außen liegendes Ablauftauchrohr wie in der WO-A-93/21111 zugeordnet sein.

Es ist auch möglich, dem konzentrischen außen liegenden Zulaufrohr eine Überlaufschwelle samt Rinne als Ablauf zuzuordnen.

## Patentansprüche

1. Vorrichtung zur Beschickung eines Klärbeckens runder oder rechteckiger Form mit zu klärendem Abwasser, aufweisend
eine Zutrittsleitung (18) und eine ringförmige Verteilerleitung (12) mit Verteilungsöffnungen (22) für das zu klärende Abwasser,
wobei die ringförmiger Verteilerleitung (12) geeignet ist im Klärbecken wandund sohlennah angeordnet zu sein, und
wobei die Verteilungsöffnungen (22) derart angeordnet sind, dass sie im Klärbecken in Richtung zum Beckenzentrum unter einer Neigung von etwa 45° gegen die Beckensohle gerichtet sind, so dass bei Betrieb der Vorrichtung im Klärbecken eine zum Beckenzentrum gerichtete Senkenströmung entsteht.

2. Vorrichtung nach Anspruch 1, **dadurch gekennzeichnet, dass** die Verteilungöffnungen (22) zur Ausbildung einer über den Umfang gleichmäßigen vom Beckenrand zum Zentrum gerichteten Senkenströmung unterschiedliche Abstände voneinander auf der Verteilerleitung (12) aufweisen.

3. Vorrichtung nach mindestens einem der Ansprüche 1 und 2, **dadurch gekennzeichnet, dass** die Verteilungsöffnungen (22) zur Ausbildung einer über den Umfang gleichmäßigen vom Beckenrand zum Zentrum gerichteten Senkenströmung als Schlitze oder Bohrungen mit unterschiedlichen Schlitzlängen bzw. Bohrlochdurchmessern ausgebildet sind.

4. Vorrichtung nach mindestens einem der Ansprüche 1 bis 3, **dadurch gekennzeichnet, dass** die Verteilerleitung (12) zur Ausbildung einer über den Umfang gleichmäßigen vom Beckenrand zum Zentrum gerichteten Senkenströmung Abschnitte mit unterschiedlichen Durchmessern aufweist.

5. Vorrichtung nach mindestens einem der Ansprüche 1 bis 4, **dadurch gekennzeichnet, dass** die Verteilungsöffnungen (22) in möglichst geringem Abstand, insbesondere unter 20 - 40 cm, von der Beckensohle (16) angeordnet sind .

6. Vorrichtung nach mindestens einem der Ansprüche 1 bis 5, **dadurch gekennzeichnet, dass** die Verteilerleitung (12) äquidistant zu einem zentrischen oder konzentrischen Ablauf (24), äquidistant zu einem zentrischen Schlammabzug und äquidistant zu der Wandung des Beckens angeordnet ist.

7. Vorrichtung nach mindestens einem der Ansprüche 1 bis 6, **dadurch gekennzeichnet, dass** nur eine einzige zu der Verteilerleitung (12) führende Zutrittsleitung (18) vorgesehen ist.

8. Vorrichtung nach mindestens einem der Ansprüche 1 bis 6, **dadurch gekennzeichnet, dass** mehrere zu der Verteilerleitung (12) führende Zutrittsleitungen (18) vorgesehen sind.

9. Vorrichtung nach Anspruch 3, **dadurch gekennzeichnet, dass** die als Schlitze oder Bohrungen ausgebildeten Verteilungsöffnungen (22) durch entsprechende Dimensionierung an die hydraulischen Randbedingungen, insbesondere die Druckhöhe sowie die Rohrreibung und die örtlichen Verluste, angepasst sind.

10. Einrichtung zur Behandlung von Abwasser, mit
einem eine runde oder rechteckige Form aufweisenden Klärbecken mit einer Wandung und einer Beckensohle (16) zur Aufnahme von zu klärendem Abwasser, und
einer Vorrichtung zur Beschickung des Beckens nach einem der Ansprüche 1 bis 9.

11. Einrichtung nach Anspruch 10, **dadurch gekennzeichnet, dass** für den Auslauf des geklärten Abwassers ein getauchtes, mittig angeordnetes, stemförmiges Ablaufrohr vorgesehen ist.

## Claims

1. Apparatus to feed waste water to be purified into circular or rectangular tanks including the following features :
an inlet conduit (18) and a ring conduit (12) having openings (22) for the distribution of the waste water to be purified,
the ring conduit (12) being suitable to be positioned adjacent the wall or the bottom of the tank, and
the openings (22) being designed and arranged in an inclined manner of about 45° with respect to the bottom of the tank in the direction towards the center of the tank, so that during use of the apparatus a sinking stream occurs in the tank being directed to the center of the tank.

2. Apparatus of claim 1, **characterised in that** the openings (22) are arranged on the distribution conduit (12) with differing distances to each other to form a uniform sinking stream over the circumference directed from the rim of the tank to the center of the tank.

3. Apparatus of at least one of the claims 1 and 2, **characterised in that** the openings (22) are designed in the form of slits or bores having differing length or diameters of the bores respectively to form a uniform sinking stream over the circumference directed from the rim of the tank to the center of the tank.

4. Apparatus of at least one of the claims 1 to 3, **characterised in that** the distribution conduit (12) is designed to include sections having different diameters to form a uniform sinking stream over the circumference directed from the rim of the tank to the center of the tank.

5. Apparatus of at least one of the claims 1 to 4, **characterised in that** the openings (22) are located in a distance above the bottom (16) of the tank, the distance being as small as possible, especially smaller than 20 - 40 cm.

6. Apparatus of at least one of the claims 1 to 5, **characterised in that** the conduit (12) is arranged in equidistant manner with respect to a centric or concentric outlet (24), with respect to a centric sludge outlet and with respect to the wall of the tank.

7. Apparatus of at least one of the claims 1 to 6, **characterised in that** a single inlet conduit (18) is provided the conduit being connected with the distrubutioh conduit (12).

8. Apparatus of at least one of the claims 1 to 6, **characterised in that** a plurality of inlet conduits (18) are provided the conduits being connected with the distribution conduit (12).

9. Apparatus of claim 3, **characterised in that** the openings (22) in form of slits or bores include a dimensioning adapted to the hydraulic conditions, especially the pressure and the friction in the conduit and the local pressure drop.

10. Arrangement for the treatment of waste water including
a tank to be feeded with waste water to be purified, the tank having a circular or rectangular shape and including a wall und a bottom (16), and
an apparatus to feed the tank with waste water to be purified according to one of the claims 1 to 9.

11. Arrangement of claim 10, **characterised in that** a submerged centrally arranged pipe of starlike shape is provided to run away the purified water.

## Revendications

1. Dispositif pour charger un bassin de décantation de forme circulaire ou rectangulaire avec des eaux usées à épurer, comportant
une conduite d'arrivée (18) et une conduite de distribution (12) de forme annulaire avec orifices de distribution (22) pour les eaux usées à épurer ;
la conduite de distribution (12) de forme annulaire pouvant être disposée dans le bassin de décantation proche de la paroi et proche du fond ; et
les orifices de distribution (22) étant disposés de manière à être orientés dans le bassin de décantation en direction du centre du bassin, suivant une inclinaison d'environ 45° par rapport au fond du bassin, de sorte que pendant le fonctionnement du dispositif il se forme dans le bassin de décantation un courant descendant dirigé vers le centre du bassin.

2. Dispositif selon la revendication 1, **caractérisé en ce que** pour réaliser un courant descendant régulier, orienté sur la circonférence depuis le bord du bassin vers le centre, les orifices de distribution (22) présentent des écartements différents sur la conduite de distribution (12).

3. Dispositif selon l'une au moins des revendications ou 2, **caractérisé en ce que** pour réaliser un courant descendant régulier, orienté sur la circonférence depuis le bord du bassin vers le centre, les orifices de distribution (22) sont réalisés en tant que fentes ou perçages avec des longueurs de fente ou des diamètres des trous différents.

4. Dispositif selon l'une au moins des revendications 1 à 3, **caractérisé en ce que** pour réaliser un courant descendant régulier, orienté sur la circonférence depuis le bord du bassin vers le centre, la conduite de distribution (12) comporte des tronçons de diamètres différents.

5. Dispositif selon l'une au moins des revendications 1 à 4, **caractérisé en ce que** les orifices de distribution (22) sont disposés à distance aussi réduite que possible, en particulier de 20 à 40 cm, du fond (16) du bassin.

6. Dispositif selon l'une au moins des revendications 1 à 5, **caractérisé en ce que** la conduite de distribution (12) est disposée équidistante d'un écoulement (24) centré ou concentrique, équidistante d'une extraction centrée des boues et équidistante de la paroi du bassin.

7. Dispositif selon l'une au moins des revendications 1 à 6, **caractérisé en ce qu'**il n'est prévu qu'une seule conduite d'arrivée (18) menant à la conduite de distribution (12).

8. Dispositif selon l'une au moins des revendications 1 à 6, caractérisé en ce sont prévues plusieurs conduites d'arrivée (18) menant à la conduite de distribution (12).

9. Dispositif selon la revendication 3, **caractérisé en ce que** les orifices de distribution (22), réalisés en tant que fentes ou perçages, sont adaptés par dimensionnement convenable aux conditions hydrauliques marginales, en particulier à la hauteur de pression ainsi qu'à la pression des tubes et aux pertes locales.

10. Dispositif pour traiter des eaux usées comportant un bassin de décantation présentant une forme circulaire ou rectangulaire avec une paroi et un fond de bassin (6) destiné à recevoir des eaux usées à épurer, et comportant un dispositif de chargement du bassin selon l'une des revendications 1 à 9.

11. Dispositif selon la revendication 10, **caractérisé en ce que** pour l'écoulement des eaux usées épurées, il est prévu un tube d'écoulement immergé, disposé au centre, en forme d'étoile.
